# EUROPÄISCHE PATENTANMELDUNG

(11) **EP 1 912 038 A1**
(43) Veröffentlichungstag der Anmeldung: **16.04.2008**
(21) Anmeldenummer: 08000415.3
(22) Anmeldetag: 07.09.2005
(51) Int. Cl.: G01B 7/06, F01D 5/18

(54) **Verfahren zum Ermitteln der Wanddicke eines hohlen Bauteils**

(30) Priorität: 03.11.2004 EP 04026104
(62) Teilanmeldung aus: 05787211.1
(71) Anmelder: Siemens Aktiengesellschaft, 80333 München (DE)
(72) Erfinder: Bast, Ulrich, Dr., 81667 München (DE); Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Wilkenhöner, Rolf Dr., 14532 Kleinmachnow (DE)

(57) **Zusammenfassung**

Im erfindungsgemäßen Verfahren zum Ermitteln der Wanddicke eines hohlen Bauteils (1) wird ein zeitlich veränderliches Magnetfeld dazu genutzt, ein Sekundär-Magnetfeld in einer einen Hohlraum (3) des Bauteils (1) umgebenden Bauteilwand (5) zu induzieren. Das Ermitteln der Dicke der Bauteilwand (5) erfolgt durch Erfassen mindestens einer das Sekundär-Magnetfeld beeinflussenden Größe der Bauteilwand (5). Vor dem Erfassen der mindestens einen Größe wird ein ferromagnetisches Material (11) in den Hohlraum (3) eingebracht.

## Beschreibung

Die vorliegende Erfindung betrifft ein Verfahren zum Ermitteln der Wanddicke eines hohlen Bauteils, insbesondere eines hohlen Turbinenbauteils wie zum Beispiel einer hohlen Turbinenschaufel.

Zum Ermitteln der Wanddicke eines hohlen Bauteils kommen heute zumeist Ultraschallmessverfahren oder Wirbelstrommessverfahren zur Anwendung.

Bei Ultraschallmessverfahren wird eine Ultraschallwelle an der Oberfläche der Wand, deren Dicke zu ermitteln ist, erzeugt und die Laufzeit der Ultraschallwelle vom Erzeugungspunkt zur Rückseite der Wand, an welcher ein Teil der Welle reflektiert wird, und zurück zur Ursprungsstelle gemessen. Bei bekannter Schallgeschwindigkeit im Material der Wand kann aus der Laufzeit der Ultraschallwelle die Wanddicke bestimmt werden. Bei sehr dünnen Wänden stößt diese Methode jedoch an ihre Grenzen, da der Zeitpunkt der Ankunft der reflektierten Ultraschallwelle nicht eindeutig bestimmt werden kann. Für hohle Bauteile, die aus einer auf Nickel oder Kobalt basierenden Legierung hergestellt sind, beträgt die minimale Wanddicke, die mittels des Ultraschallverfahrens ermittelt werden kann, etwa 0,5 mm. Dies ist insbesondere für Turbinenbauteile wie etwa Turbinenschaufeln von Bedeutung, da diese häufig aus Basislegierungen hergestellt sind, die auf Nickel oder Kobalt basieren. Ultraschallmessverfahren sind bspw. in der DE 191 09 568 A1 beschreiben.

In einem Wirbelstrommessverfahren wird ein zeitlich veränderliches Magnetfeld, das bspw. von einer wechselstromdurchflossenen Erregerspule erzeugt wird, dazu benutzt, Wirbelströme, in der Wand des Bauteils zu induzieren, die wiederum ein Magnetfeld, ein sog. Sekundär-Magnetfeld, in der Wand induzieren. Anhand des Sekundär-Magnetfeldes kann die Impedanz (also der Realteil und den Imaginärteil des komplexen Widerstandes) der Wand gemessen werden. Aus der Impedanzmessung kann anhand des Vergleiches mit einer Referenzmessung an einem Referenzkörper die Wanddicke ermittelt werden.

Ein alternatives Wirbelstrommessverfahren induziert in der Wand, deren Dicke zu ermitteln ist, Wirbelströme mittels Magnetfeldern, deren Frequenz bspw. zwischen 500 kHz und 20 mHz variiert wird. Anhand einer Messung der Impedanz als Funktion der Frequenz des erregenden Magnetfeldes kann die Dicke der Wand ermittelt werden. Mit abnehmender Frequenz des erregenden Feldes vergrößert sich nämlich die Eindringtiefe der Wirbelströme in das Material. Bei genügend niedriger Frequenz erreicht das induzierte Sekundär-Magnetfeld daher den Hohlraum der Schaufel, was mit einer charakteristischen Zunahme der Impedanz einhergeht. Die Wandstärke kann dann aus der Frequenz ermittelt werden, bei der die Zunahme der Impedanz auftritt. Wirbelstrommessverfahren sind bspw. in der WO 99/26062 A1 beschrieben.

Gegenüber dem vorliegenden Stand der Technik ist es Aufgabe der Erfindung, ein vorteilhaftes Verfahren zum Ermitteln der Wanddicke eines hohlen Bauteils zur Verfügung zu stellen.

Diese Aufgabe wird durch ein Verfahren zum Ermitteln der Wanddicke eines hohlen Bauteils nach Anspruch 1 gelöst. Die abhängigen Ansprüche enthalten vorteilhafte Ausgestaltungen des erfindungsgemäßen Verfahrens.

Im erfindungsgemäßen Verfahren zum Ermitteln der Wanddicke eines hohlen Bauteils wird ein zeitlich veränderliches Magnetfeld dazu genutzt, ein Sekundär-Magnetfeld in einer einen Hohlraum des Bauteils umgebenden Bauteilwand zu induzieren. Das Magnetfeld kann dabei bspw. mittels einer wechselstromdurchflossenen Erregerspule erzeugt werden. Das Ermitteln der Dicke der Bauteilwand erfolgt durch Erfassen mindestens einer das Sekundär-Magnetfeld beeinflussenden Größe der Wand, die bspw. die Impedanz oder insbesondere die Permeabilität der Wand sein kann. Im erfindungsgemäßen Verfahren wird vor dem Erfassen der mindestens einen Größe ein ferromagnetisches Material auf die dem Hohlraum zugewandte Seite der Bauteilwand aufgebracht oder in den Hohlraum eingebracht. Als ferromagnetisches Material kann dabei insbesondere ein ferromagnetisches Metall, eine ferromagnetische Legierung oder ein ferromagnetischer keramischer Werkstoff mit hoher magnetischer Permeabilität Verwendung finden. Bspw. im Vergleich zu für das Herstellen von Turbinenschaufeln verwendeten Werkstoffen, weist das ferromagnetische Material eine um Zehnerpotenzen (10⁷ bis 10¹⁰) höhere Permeabilitätszahl µᵣ auf. Dieser Unterschied lässt sich mittels Wirbelstromtechnik gut nachweisen. Das ferromagnetische Material kann in alle nach außen zugänglichen Hohlräume eingebracht werden. Dies lässt eine universelle Wanddickenbestimmung an hohlen Bauteilen, insbesondere an hohlen Gasturbinenschaufeln, zu.

Falls die Wanddicke von Gasturbinenschaufeln, welche häufig aus Basislegierungen hergestellt sind, die auf Nickel oder Kobalt basieren, ermittelt werden soll, eignet sich als ferromagnetisches Metall insbesondere Nickel oder Kobalt oder als ferromagnetische Legierung eine Legierung mit hohem Nickel- oder Kobaltanteil, da diese ferromagnetischen Materialien die auf Nickel- oder Kobalt basierende Basislegierung der Turbinenschaufel, wenn überhaupt, nur wenig kontaminieren. Selbstverständlich sind die genannten Metalle oder Legierungen auch für das Ermitteln der Wanddicke von anderen aus Nickel- oder Kobalt enthaltenden Basislegierungen hergestellten hohlen Bauteilen besonders geeignet.

Vorteilhafter Weise kann das ferromagnetische Material als ferromagnetisches Pulver vorliegen, was das Einbringen in die Hohlräume vereinfacht.

In einer ersten Variante zum Einbringen des ferromagnetischen Pulvers auf die Innenseite der Bauteilwand, d.h. auf die dem Hohlraum zugewandte Seite der Wand, wird das Pulver in Form eine Suspension mit einem Binder und einem flüchtigen Trägermittel aufgebracht. Nach dem Verdunsten des flüchtigen Trägermittels, das bspw. Wasser oder Alkohol sein kann, bildet das zurückbleibende Pulver-Binder-Gemisch eine ferromagnetische Innenbeschichtung in den Hohlräumen aus. Das Erfassen der mindestens einen Größe erfolgt, nachdem das Trägermittel verdunstet ist. Nachdem das Erfassen aller für die Ermittlung der Wanddicke nötigen Größen abgeschlossen ist, wird das ferromagnetische Pulver wieder ausgewaschen. Ein rückstandsfreies Auswaschen ist bspw. möglich, wenn zum Auswaschen die gleiche Trägerflüssigkeit verwendet wird, die auch in der Suspension Verwendung fand.

Eine alternative Möglichkeit, das ferromagnetische Pulver auf die Innenseite der Bauteilwand aufzubringen, besteht darin, das ferromagnetische Pulver in ein flüssiges Wachs oder einen flüssigen Kunststoff einzubringen. Der Hohlraum wird dann teilweise oder vollständig mit dem das ferromagnetische Pulver enthaltenden flüssigen Wachs bzw. flüssigen Kunststoff gefüllt. Das Erfassen der mindestens einen Größe erfolgt, nachdem das Wachs bzw. der Kunststoff getrocknet ist. Nach dem Erfassen aller für das Ermitteln der Wanddicke nötigen Größen wird das Wachs bzw. der Kunststoff wieder ausgebrannt oder ausgeschmolzen. Anschließend können eventuelle Pulverreste rückstandsfrei ausgewaschen werden.

Eine dritte Möglichkeit, das ferromagnetische Material auf die Innenseite der Bauteilwand aufzubringen, besteht darin, das ferromagnetische Material in Form von in einem Lösungsmittel, bspw. einer Salzlösung, gelösten Ionen aufzubringen. Nach dem Verdunsten des Lösungsmittels bilden die Ionen eine Innenbeschichtung der Bauteilwand. Das Erfassen der mindestens einen Größe erfolgt, nachdem das Lösungsmittel verdunstet ist. Nach dem Erfassen aller für das Ermitteln der Wanddicke nötigen Größen, wird das ferromagnetische Material wieder aufgelöst und ausgewaschen.

Zum Auflösen und Auswaschen der Innenbeschichtung kann insbesondere das gleiche Lösungsmittel Verwendung finden, in dem die Ionen beim Aufbringen auf die Bauteilwand gelöst waren.

Als weitere Alternative ist es auch möglich, eine Ferrofluid als ferromagnetisches Material in den Hohlraum einzubringen. Unter einem Ferrofluid ist eine magnetisierbare Flüssigkeit zu verstehen, deren Viskosität sich mit dem magnetisierenden Magnetfeld nicht oder nur wenig ändert. Das Ferrofluid kann als ein stabiles Kolloid aus Partikeln im Mikrometer- oder Submikrometerbereich, vorzugsweise im Nanometerbereich, in einer Trägerflüssigkeit ausgeführt sein. Ein für die Ermittlung der Wanddicke eines hohlen Bauteils geeignetes Ferrofluid ist bspw. eine Suspension von nanoskaligen Eisenpartikeln in einer öligen Trägerflüssigkeit. Das Ferrofluid kann insbesondere auch problemlos in Spalte und Ritzen des Hohlraums eindringen, so dass eine sichere Wanddickenbestimmung in allen Bereichen der den Hohlraum umgebenden Wand erzielt werden kann. Nach dem Ermitteln der für die Wanddickenbestimmung nötigen Größen kann das Ferrofluid einfach ausgegossen werden.

In einer Ausgestaltung des erfindungsgemäßen Verfahrens erfolgt das Ermitteln der Dicke der Bauteilwand, indem die mindestens eine Größe sowohl mit an die zu messende Bauteilwand, angehaltener Messsonde erfasst wird, als auch für verschiedene Abstände der Messsonde über einem Referenzkörper aus einem ferromagnetischen Material, das dem auf die Innenseite der Bauteilwand aufgebrachten ferromagnetischen Material zumindest ähnelt. Die mindestens eine mit an die Bauteilwand angehaltener Messsonde erfasste Größe wird dann mit den für die verschiedenen Abstände der Messsonde über dem Referenzkörper erfassten Größen verglichen. Derjenige Abstand zwischen der Messsonde und dem Referenzkörper, welcher die Größe liefert, die der für die Wand gemessenen Größe am ähnlichsten ist, entspricht im Wesentlichen der Dicke der Wand. Mit dem beschriebenen Verfahren kann die gesamte Wand einer hohlen Turbinenschaufel vermessen werden. Als Obergrenze für diese Vorgehensweise sind Wandstärken von ca. 5 bis 6 mm anzunehmen.

In einer alternativen Ausgestaltung des erfindungsgemäßen Verfahrens erfolgt das Ermitteln der Dicke der Bauteilwand, indem die Frequenz des erregenden zeitlich veränderlichen Magnetfeldes variiert wird. Als die mindestens eine Größe wird die Permeabilität der Wand als Funktion der Frequenz des zeitlich veränderlichen Magnetfeldes erfasst. Aus dem Verlauf der Permeabilität als Funktion der Frequenz kann dann die Wanddicke ermittelt werden. Das auf die Innenseite der Bauteilwand aufgebrachte ferromagnetische Material führt nämlich zu einem charakteristischen Steilanstieg der Permeabilität, wenn die Wirbelströme die Innenfläche der Wand erreichen. Das ferromagnetische Material verstärkt dabei aufgrund seiner Magnetisierbarkeit das Sekundär-Magnetfeld, welches durch die Wirbelströme induziert wird, wesentlich. Das Sekundär-Magnetfeld wird von der Wirbelstromsonde gemessen. Es ist somit das eigentliche Messsignal. Im Vergleich zu Messungen der elektrischen Leitfähigkeit als Funktion der Frequenz, wie dies im Stand der Technik erfolgt, wird die Messgenauigkeit erhöht und die Nachweisgrenze im Hinblick auf größere Wanddicken verbessert.

Mit dem erfindungsgemäßen Verfahren können im Vergleich zu Ultraschallmessungen, wie sie im Stand der Technik durchgeführt werden, Wandstärken von weniger als 0,5 mm gut vermessen werden.

Weiter Merkmale, Eigenschaften und Vorteile der vorliegenden Erfindung ergeben sich aus der nachfolgenden Beschreibung von Ausführungsbespielen unter Bezugnahme auf die beiliegenden Figuren.
Figur 1 zeigt ein erstes Verfahren zum Aufbringen von ferromagnetischem Material auf die Innenseite einer Wand eines hohlen Bauteils.
Figur 2 zeigt das Bauteil aus Figur 1 während des Ermittelns der Wanddicke.
Figur 3 zeigt ein Verfahren zum Einbringen eines ferromagnetischen Materials in den Hohlraum eines hohlen Bauteils.
Figur 4 zeigt das Ermitteln der Wanddicke des hohlen Bauteils aus Fig. 3 nach dem Einbringen des ferromagnetischen Materials.
Figur 5 zeigt in einer vereinfachten Darstellung die Abhängigkeit der für eine Bauteilwand gemessenen Permeabilität von der Frequenz eines erregenden Magnetfeldes.
Figur 6 zeigt in einer stark schematisierten Darstellung einen Verfahrensschritt einer ersten Variante des Verfahrens zum Ermitteln der Wanddicke eines hohlen Bauteils.
Figur 7 zeigt beispielhaft eine Gasturbine in einem Längsteilschnitt.
Figur 8 zeigt in perspektivischer Ansicht eine Laufschaufel oder Leitschaufel einer Strömungsmaschine.
Figur 9 zeigt eine Brennkammer einer Gasturbine

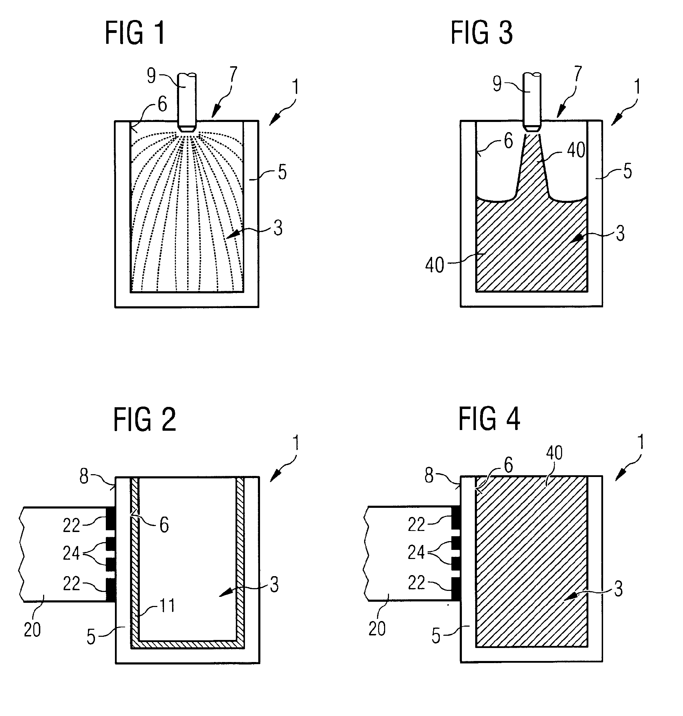

In Figur 1 ist das Aufbringen einer ferromagnetischen Beschichtung auf die Innenseite der Wand eines hohlen Bauteils dargestellt.

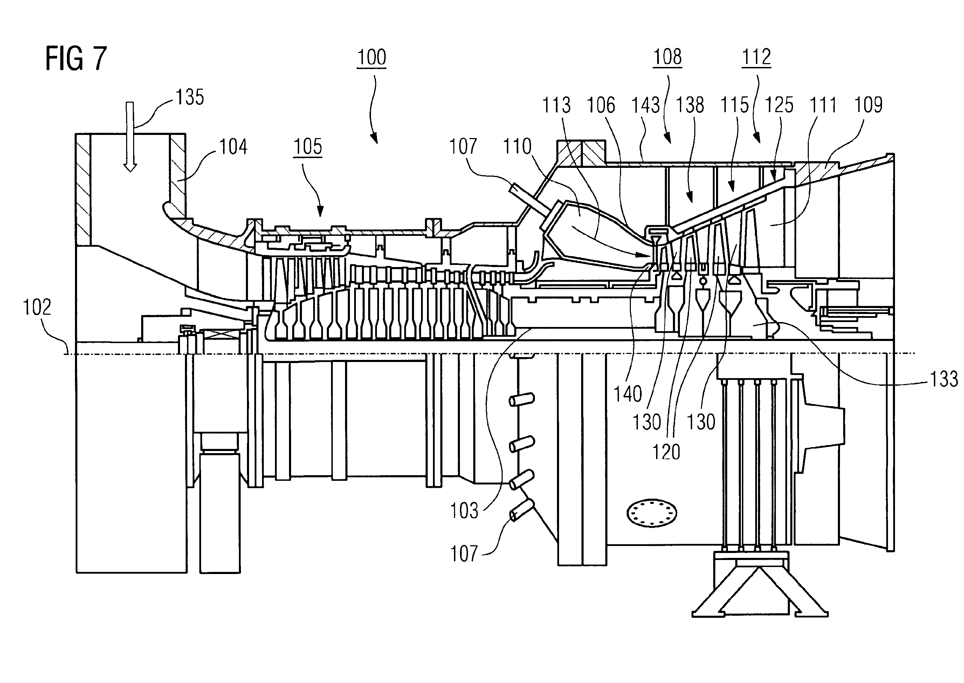

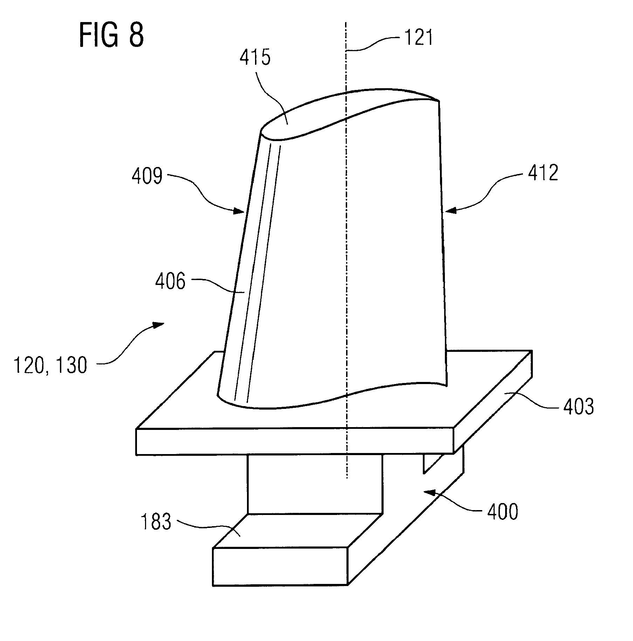

Das Bauteil 1, das insbesondere eine hohle Gasturbinenschaufel 120, 130 (Fig. 7, 8) sein kann, ist in Figur 1 in einer stark schematisierten Darstellung im Schnitt gezeigt. Es weist einen Hohlraum 3 auf, der von einer Bauteilwand 5 begrenzt wird. Über eine Öffnung 7 ist der Hohlraum 3 vom Äußeren des Bauteils 1 her zugänglich.

Durch die Öffnung 7 wird eine Spritzdüse 9 in den Hohlraum 3 des Bauteils 1 eingeführt. Die Spritzdüse 9 wird dazu verwendet, eine Suspension eines ferromagnetischen Pulvers, eines Binders und eines flüchtigen Trägermittels auf die Innenseite 6 der Bauteilwand 5 aufzuspritzen. Dabei kann die Spritzdüse 9 gegebenenfalls auch relativ zur Bauteilwand 5 innerhalb des Hohlraumes bewegt werden.

Nachdem die Suspension auf die Innenseite 6 der Bauteilwand 5 aufgespritzt worden ist, verdunstet das flüchtige Trägermittel, und es bleibt eine ferromagnetische Beschichtung 11 auf der Innenseite 6 der Bauteilwand 5 zurück, die das ferromagnetische Pulver und den Binder umfasst (Fig. 2).

Zum Ermitteln der Wanddicke des Bauteils 1 wird eine Messsonde 20 mit der Außenseite 8 der Bauteilwand 5 in Kontakt gebracht. Die Messsonde 20, die in der Figur 2 im Schnitt dargestellt ist, umfasst eine Erregerspule 22 und eine Messeinheit 24, die ebenfalls als Spule ausgebildet sein kann.

Mittels eines durch die Erregerspule 22 fließenden Wechselstroms wird ein zeitlich veränderliches Magnetfeld erzeugt, welches in die Bauteilwand 5 eindringt. In der Bauteilwand 5 verursacht es Wirbelströme, die ihrerseits zu einem zeitlich veränderlichen Magnetfeld, dem so genannten Sekundär-Magnetfeld führen. Die Eigenschaften des Sekundär-Magnetfeldes werden durch die physikalischen Größen des Materials der Bauteilwand beeinflusst. Insbesondere übt die Permeabilität µᵣ einen starken Einfluss auf das Sekundär-Magnetfeld aus.

Da die ferromagnetische Beschichtung 11 eine deutlich höhere Permeabilität µᵣ als das Material der Bauteilwand 5 aufweist, übt es einen im Vergleich zum Einfluss der Bauteilwand 5 dominierenden Einfluss auf das Sekundär-Magnetfeld aus.

Mittels der Empfängerspule (24) kann durch Messen des Sekundär-Magnetfeldes die Permeabilität erfasst werden.

Das Ermitteln der Wanddicke des Bauteils 1 aus dem Signal der Empfängerspule 24 kann auf verschiedene Weisen erfolgen.

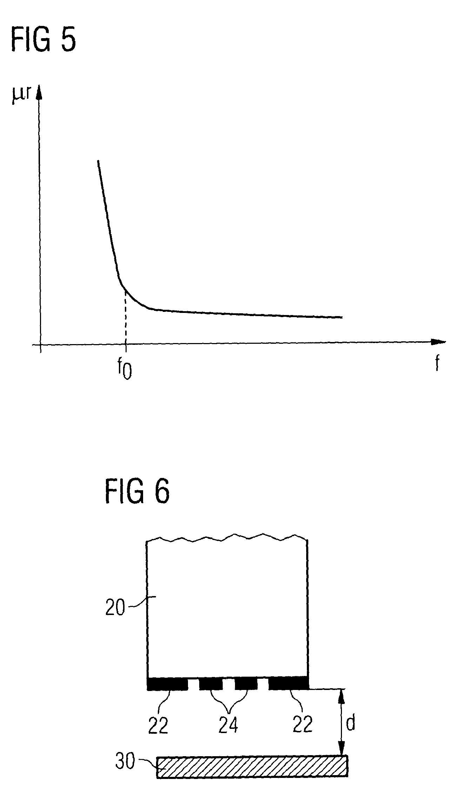

Eine Möglichkeit, die Wanddicke zu ermitteln, ist in Figur 5 dargestellt. Diese beruht darauf, die Frequenz des durch die Erregerspule 22 fließenden Wechselstroms zu variieren, bspw. zwischen 500 kHz und 20 MHz. Je höher die Frequenz des durch die Erregerspule 22 fließenden Wechselstromes ist, desto weniger tief dringt das zeitlich veränderliche Magnetfeld in die Bauteilwand 5 ein. Die Wanddicke kann daher bestimmt werden, indem bspw. die Frequenz des durch die Erregerspule 22 fließenden Wechselstroms ausgehend von einer hohen Frequenz verringert wird. Mit zunehmender Frequenzverringerung dringt das zeitlich veränderliche Magnetfeld immer tiefer in die Bauteilwand ein und erreicht bei einer bestimmten Frequenz f₀ die ferromagnetische Beschichtung 11. Bei dieser Frequenz f₀ steigt die von der Empfängerspule 24 erfasste Permeabilität steil an. Aus der Frequenz f₀, bei der dieser steile Anstieg auftritt, kann die Wanddicke der Behälterwand 5 ermittelt werden.

Eine alternative Vorgehensweise zum Ermitteln der Dicke der Bauteilwand 5 ist in Figur 6 schematisch dargestellt. In dieser Vorgehensweise findet keine Variation der Frequenz des durch die Erregerspule 22 fließenden Wechselstromes statt, d.h. die Messung wird bei einer festen Frequenz des zeitlich veränderlichen Magnetfeldes durchgeführt. Zum Ermitteln der Wanddicke wird zum einen das in der Empfängerspule 24 verursachte Signal bei an der Außenseite 8 der Behälterwand 5 anliegender Messsonde 20 (Fig. 2) erfasst.

In weiteren Schritten wird die Messsonde 20 in verschiedene definierte Abstände zu einem Referenzkörper 30 gebracht, der aus demselben oder einem sehr ähnlichen Material wie die Ferromagnetische Beschichtung aufgebaut ist (Fig.6). Für die verschiedenen Abstände d wird das Signal in der Messspule 24 erfasst, das ein von der Erregerspule 22 ausgehendes zeitlich veränderliches Magnetfeld verursacht, das dieselben Parameter aufweist, wie das Magnetfeld, das bei an die Außenseite 8 der Behälterwand 5 angelegter Messsonde 20 Verwendung fand. Die für die verschiedenen Abstände d erfassten Signale werden mit demjenigen Signal verglichen, das die Messspule 24 bei an die Behälterwand 5 angelegter Messsonde erfasst hat. Derjenige Abstand, bei dem das Signal dem Signal der an die Behälterwand 5 angelegten Messsonde 20 am meisten ähnelt, entspricht der Wanddicke der Behälterwand 5.

Nachdem die für das Ermitteln der Wanddicke erforderlichen Größen erfasst worden sind, wird die ferromagnetische Beschichtung wieder aus dem Hohlraum 3 entfernt. Dazu wird der Hohlraum 3 mit der Trägerflüssigkeit solange gespült, bis die ferromagnetische Schicht rückstandsfrei ausgewaschen ist.

Im vorangegangenen Ausführungsbeispiel wurde die ferromagnetische Schicht auf die Innenseite 6 der Behälterwand 5 aufgebracht, indem eine Suspension auf die Innenseite der Behälterwand aufgesprüht worden ist. Alternativ kann auch eine Lösung aufgesprüht werden, die Ionen des ferromagnetischen Materials enthält. Nach dem Verdunsten des Lösungsmittels bleibt das ferromagnetische Material als Beschichtung auf der Innenseite 6 der Behälterwand zurück. Die Messung der Wanddicke erfolgt dann wie im ersten Ausführungsbeispiel. Das Entfernen der ferromagnetischen Beschichtung auf der Innenseite der Behälterwand 5 erfolgt nach dem Erfassen der für das Ermitteln der Wanddicke notwendigen Größen dadurch, dass die ferromagnetische Beschichtung mit dem Lösungsmittel wieder aufgelöst und komplette ausgewaschen wird.

Eine dritte Alternative zum Bereitstellen ferromagnetischen Materials auf der Behälterwand 5 ist in den Figuren 3 und 4 dargestellt.

Im Unterschied zu den vorangegangenen Ausführungsbeispielen erfolgt nicht nur eine Beschichtung der Innenseite 6 der Behälterwand 5, sondern es wird der gesamte Hohlraum 3 mit ferromagnetischem Material ausgefüllt. Dazu wird ein Wachs 40, dem ein ferromagnetisches Pulver beigemischt ist, durch die Öffnung 7 in den Hohlraum 3 des Behälters 1 eingefüllt. Nachdem der Hohlraum 3 vollständig mit dem Wachs 40 gefüllt ist und das Wachs 40 getrocknet ist, kann die Wanddicke, wie mit Bezug auf das erste Ausführungsbeispiel beschrieben, ermittelt werden. Nachdem alle für das Ermitteln der Wanddicke relevanten Parameter erfasst sind, wird das Wachs 40 ausgebrannt oder ausgeschmolzen. Eventuelle Reste des ferromagnetischen Pulvers können anschließend rückstandsfrei ausgewaschen werden.

Anstatt mit einem ferromagnetischen Pulver enthaltenden Wachs, kann in diesem Ausführungsbeispiel der Hohlraum 3 auch mit einem ferromagnetisches Pulver enthaltenden Kunststoff gefüllt werden. Insbesondere bieten sich dabei thermoplastische Kunststoffe an, da diese bei Abkühlung aushärten und sich bei Erwärmen wieder verflüssigen.

Statt mit einem ferromagnetisches Pulver enthaltenden Wachs oder Kunststoff kann der Hohlraum 3 auch mit einem Ferrofluid gefüllt werden. Nachdem der Hohlraum 3 vollständig mit dem Ferrofluid gefüllt ist, kann die Wanddicke, wie mit Bezug auf das erste Ausführungsbeispiel beschrieben, ermittelt werden. Wenn alle für das Ermitteln der Wanddicke relevanten Parameter erfasst sind, wird das Ferrofluid wieder entfernt, bspw. ausgegossen. Eventuelle Reste des Ferrofluids können anschließend ausgewaschen werden.

Das ferromagnetische Pulver bzw. die ferromagnetische Ionen, die in den beschriebenen Ausführungsbeispielen Verwendung fanden, können bspw. ferromagnetische Metalle, insbesondere Eisen (Fe), Kobalt (Co) oder Nickel (Ni) sein. Alternativ können auch ferromagnetische Legierungen aus weichmagnetischen Werkstoffen wie Fe-Si-, Fe-Al, oder Fe-Ni-Legierungen, aus hartmagnetischen Werkstoffen wie Fe-Al-Ni-Co- oder Sm-Co-Fe-Legierungen sowie Heuslersche Legierungen Verwendung finden. Heuslersche Legierungen sind bspw. in A.F. Hollemann, E. Wiberg "Lehrbuch der anorganischen Chemie "91.-100. Auflage, Walter de Gruyter, Berlin, New York, 1985 beschrieben.

Neben ferromagnetischen Metallen und ferromagnetischen Legierungen kommen auch ferromagnetische keramische Werkstoffe zur Verwendung als ferromagnetisches Material in den Ausführungsbeispielen in Betracht.

Als Messsonde können herkömmliche Wirbelstrommesssonden Verwendung finden. Ein möglicher Aufbau der Messsonde kann der WO 99/26062 A1 sowie den darin genannten Druckschriften entnommen werden. Auf die Offenbarung der WO 99/26062 A1 und der darin genannten Druckschriften wird daher bezüglich eines möglichen Aufbaus der Messsonde (20) verwiesen.

Als Messsonden können auch die so genannten Squid (Superconducting-quantum-interference-device) zur Bestimmung der Wandstärke benutzt werden. Aufgrund der ernormen Empfindlichkeit der Squid im Vergleich zu konventionellen Magnetfeldsensoren kann die Wanddicke in hinreichender Genauigkeit bestimmt werden. Hier wird eine Messgenauigkeit von ca. 0,1mm und besser angestrebt. Am besten werden Squids aus Hochtemperatursupraleitern verwendet, die mit flüssigem Stickstoff gekühlt werden können und daher leichter handhabbar sind. Somit können kleine Abstände zu der vermessenen Bauteiloberfläche realisiert und eine hinreichende laterale Auflösung bei dem Messverfahren erzielt werden.

Oft werden in die Turbinenschaufeln noch Bohrungen für Kühlluftkanäle eingebracht, wobei es auch hier wichtig ist, dass gewisse Wanddicken eingehalten werden.

Das erfindungsgemäße Verfahren kann daher auch zur Bestimmung der Wanddicke bzw. des Abstandes der hergestellten Kühlluftbohrung im Inneren benutzt werden. Der Hohlraum 3 gemäß Figur 1, 2, 3 oder 4 entspricht dabei einem Kühlluftkanal im Inneren einer Turbinenschaufel 120, 130.

Die Figur 7 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosionsund/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

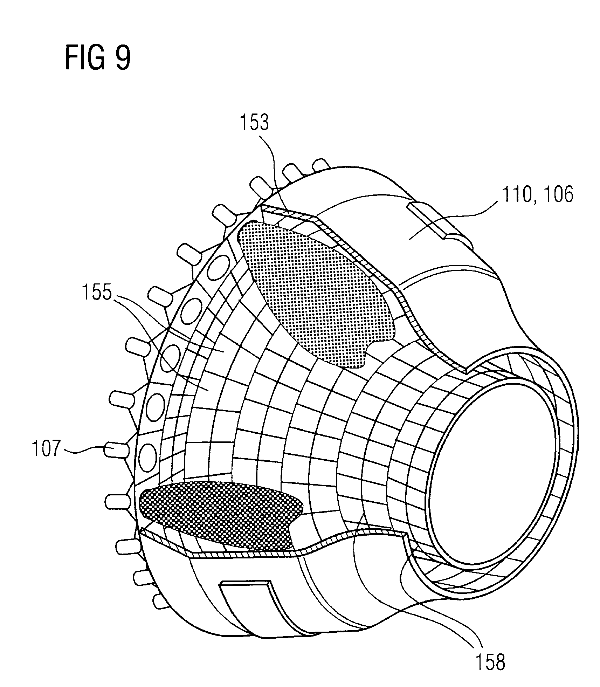

Die Figur 9 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Ermitteln der Wanddicke eines hohlen Bauteils (1),
in welchem ein zeitlich veränderliches Magnetfeld dazu genutzt wird,
ein Sekundär-Magnetfeld in einer einen Hohlraum (3)des Bauteils (1) umgebenden Bauteilwand (5) zu induzieren und
in welchem das Ermitteln der Dicke der Bauteilwand (5) durch Erfassen mindestens einer das Sekundär-Magnetfeld beeinflussenden Größe der Bauteilwand (5) erfolgt,
**dadurch gekennzeichnet,**
**dass** vor dem Erfassen der mindestens einen Größe ein ferromagnetisches Material (11, 40) auf die dem Hohlraum (3) zugewandte Seite (6) der Bauteilwand (5) aufgebracht oder in den Hohlraum (3) eingebracht wird,
**dass** als ferromagnetisches Material in Form eines Ferrofluids in den Hohlraum eingebracht wird oder
**dass** als Ferrofluid eine Suspension von nanoskaligen Eisenpartikeln in einem öligen Träger Verwendung findet, bevor das Erfassen der mindestens einen Größe erfolgt.

2. Verfahren nach Anspruch 1,
**dadurch gekennzeichnet, dass**
als ferromagnetisches Material (11, 40)
ein ferromagnetisches Metall,
eine ferromagnetische Legierung oder
ein ferromagnetischer keramischer Werkstoff
mit hoher magnetischer Permeabilität Verwendung findet.

3. Verfahren nach Anspruch 2,
**dadurch gekennzeichnet, dass**
als ferromagnetisches Metall Nickel oder Kobalt oder
als ferromagnetische Legierung eine Legierung mit hohem Nickel- oder Kobaltanteil
Verwendung findet.

4. Verfahren nach Anspruch 1,
**dadurch gekennzeichnet, dass**
das ferromagnetische Pulver und der Binder nach dem Abschluss des Erfassens aller für die Ermittlung der Wanddicke nötigen Größen ausgewaschen wird.

5. Verfahren nach Anspruch 4,
**dadurch gekennzeichnet, dass**
zum Auswaschen das gleiche Lösungsmittel wie diejenige, die in der Suspension Verwendung fand, zur Anwendung kommt.

6. Verfahren nach Anspruch 1,
**dadurch gekennzeichnet, dass**
das Wachs (40) bzw. der Kunststoff nach dem Abschluss des Erfassens aller für das Ermitteln der Wanddicke nötigen Größen ausgebrannt oder ausgeschmolzen wird.

7. Verfahren nach Anspruch 6,
**dadurch gekennzeichnet, dass**
nach dem Ausbrennen bzw. nach dem Ausschmelzen eventuelle Pulverreste ausgewaschen werden.

8. Verfahren nach Anspruch 1,
**dadurch gekennzeichnet, dass**
das ferromagnetische Material nach dem Abschluss des Erfassens aller für das Ermitteln der Wanddicke nötigen Größen wieder aufgelöst und ausgewaschen wird.

9. Verfahren nach Anspruch 8,
**dadurch gekennzeichnet, dass**
zum Auswaschen das gleiche Lösungsmittel Verwendung findet, wie das, in dem die Ionen beim Aufbringen auf die Bauteilwand (5) gelöst waren.

10. Verfahren nach einem der Ansprüche 1 bis 9,
**dadurch gekennzeichnet, dass**
das Ermitteln der Dicke der Bauteilwand (5) erfolgt, indem
- die mindestens eine Größe sowohl mit an die Bauteilwand (5), deren Wanddicke zu bestimmen ist, angehaltener Messsonde (20) erfasst wird, als auch für verschiedene Abstände der Messsonde (20) über einem Referenzkörper (30) aus einem ferromagnetischen Material, das dem auf die Bauteilwand (5) aufgebrachten ferromagnetischen Material (11, 40) zumindest ähnelt, und
- die mit an die Bauteilwand (5) angehaltener Messsonde erfasste mindestens eine Größe mit den für die verschiedenen Abstände der Messsonde über dem Referenzkörper (30) erfassten Größen verglichen wird.

11. Verfahren nach einem der Ansprüche 1 bis 10,
**dadurch gekennzeichnet, dass**
das Ermitteln der Dicke der Bauteilwand (5) erfolgt, indem
- die Frequenz des zeitlich veränderlichen Magnetfeldes variiert wird,
- als die mindestens eine Größe die Permeabilität der Wand als Funktion der Frequenz des zeitlich veränderlichen Magnetfeldes erfasst wird und
- die Wanddicke aus dem Verlauf der Permeabilität als Funktion der Frequenz ermittelt wird.

12. Verfahren nach einem der vorherigen Ansprüche,
**dadurch gekennzeichnet, dass**
ein SQUID als Messsonde (20) verwendet wird.
